# EUROPÄISCHE PATENTSCHRIFT

(11) **EP 0 834 518 B1**
(45) Veröffentlichungstag und Bekanntmachung des Hinweises auf die Patenterteilung: **24.01.2001**
(21) Anmeldenummer: 97117059.2
(22) Anmeldetag: 01.10.1997
(51) Int. Cl.: C08F 2/22

(54) **Verfahren und Vorrichtung zur Herstellung von Homo- und Copolymeren in Emulsionspolymerisationstechnik**
Process and apparatus for the preparation of homo- and copolymers by polymerisation in emulsion
Procédé et appareil pour la préparation de homo- ou copolymères par polymérisation en émulsion

(30) Priorität: 02.10.1996 DE 19640793
(43) Veröffentlichungstag der Anmeldung: 08.04.1998
(73) Patentinhaber: BASF AKTIENGESELLSCHAFT, 67056 Ludwigshafen (DE)
(72) Erfinder: Kröner, Hubertus, Dr., 67435 Neustadt (DE); Klanig, Wolfgang, 69120 Heidelberg (DE); Morrison, Bradley Ronald, Dr., 68167 Mannheim (DE); Klostermann, Rainer, Dr., 68775 Ketsch (DE); Schöpke, Holger, Dr., 69151 Neckargemünd (DE); Kastenhuber, Walter, 68229 Mannheim (DE)
(74) Vertreter: Isenbruck, Günter, Dr.

(56) Entgegenhaltungen:
- AT-A- 382 629
- DE-A- 4 442 577
- FR-A- 1 462 866

## Beschreibung

Die Erfindung betrifft ein Verfahren und eine Vorrichtung zur Herstellung von Homo- und Copolymeren unter anderem des Styrols, Butadiens und (Meth)acrylsäure und ihren Derivaten in Emulsionspolymerisationstechnik.

Emulsionspolymerisationen werden so durchgeführt, das ein oder mehrere polymerisierbare Monomere in einer, möglichst bei der Reaktion inerten Flüssigkeit - üblicherweise Wasser - dispers verteilt werden, wobei als Dispergierhilfsmittel Seifen oder Detergentien anwesend sind. Die Polymerisation erfolgt meist in den gebildeten, Monomeres enthaltenden Micellen durch Initiatorradikale. Hohe Molekularmassen können dabei erhalten werden, da Monomeres fortlaufend in die Micellen eindringen kann. Der Mechanismus ist normalerweise der einer radikalischen Polymerisation, die Reaktionsprodukte können häufig direkt als Dispersion weiterverarbeitet werden (z.B. bei der Herstellung von Farben und Klebstoffen). Bekannte Produkte sind Homo- und Copolymere (P) des Styrols (S), Vinylchlorids (VC), Butadiens (Bu) oder Methylmethacrylats (MMA). Die Teilchengröße und Teilchengrößenverteilung lassen sich häufig durch die Vorgabe oder in-situ Erzeugung von Saat(-Teilchen) steuern. Typische Verfahrensbedingungen im industriellen Maßstab (am Beispiel eines Styrol-Butadien-Copolymeren oder eines Polyacrylats) sind Reaktionsdauern von 3 bis 12 h bei Temperaturen von 40 bis 100°C.

In der DE-A 23 32 637 ist eine Emulsionspolymerisation beschrieben, bei der Butadien mit Comonomeren wie Styrol, Acrylnitril (AN) oder Estern der Acryl- oder Methacrylsäure in Gegenwart üblicher Emulgierhilfsmittel wie höheren Fettsäuren, höheren Alkyl(aryl)sulfonaten, Anlagerungsprodukten von Alkylenoxiden an langkettigen Fettalkoholen und radikalbildenden Initiatoren wie Alkalipersulfaten bei Temperaturen von mehr als 115°C umgesetzt wird. Als Vorteil gegenüber dem Stand der Technik mit Temperaturen von weniger als 80°C wird die höhere Polymerisationsgeschwindigkeit angeführt. Allerdings werden die anwendungstechnischen Eigenschaften solcher bei sehr hohen Temperaturen hergestellten Produkte oftmals negativ beeinflußt, z.B. in bezug auf die Molekularmassenverteilung, die Teilchengrößenverteilung und damit verbunden z.B. die Klebkraft. Auch sicherheitstechnische Aspekte (wie Druckentwicklung bei Butadien als Komponente) spielen zunehmend eine wichtige Rolle bei der Reaktionsführung.

Dennoch ist die Reaktionsführung bei höheren Temperaturen - d.h. von mehr als 80°C, insbesondere von mehr als 85°C - eine für großtechnische Anlagen wichtige Maßnahme, da die Reaktionszeiten signifikant verringert werden können; d.h. ein großtechnisches Verfahren wird mit niedrigeren Zykluszeiten durchgeführt, was Investitionskosten für eine größere Anlagenzahl sparen hilft. Ein dabei zu lösendes wichtiges Problemfeld ist dann jedoch die Wärmeführung, beispielsweise um lokale Überhitzungen bei exothermen Reaktionen vermeiden zu helfen, die häufig zu Nebenreaktionen, ungleichförmigen Molekularmassenverteilungen oder Teilchengrößen führen können.

Aus der EP-A 0 486 262 ist die Herstellung von Emulsionscopolymeren bekannt, bei der eine Energiebilanz-Überwachung zur Steuerung der Zuführung der Comonomeren und der Temperatur dient. Zur Temperaturführung wird u.a. ein externer Wärmetauscher eingesetzt. Über die Qualität der Produkte oder den Aufbau der Pumpen oder Wärmetauscher werden keine Angaben gemacht.

Eine Hitzebehandlung von Homo- oder Copolymeren des VC, z.B. über einen externen Wärmetauscher, zur Viskositäterniedrigung nach der eigentlichen Emulsionspolymerisation beschreibt Research Disclosure Juli 1978, Referat 17149, S. 17. Eine Beeinflussung der eigentlichen Hauptreaktion wird nicht erwähnt.

In der EP-A 0 608 567 wird zum Einsatz in der Suspensionspolymerisation von VC zu Homo- oder Copolymeren in einem Kessel mit Rührer und einem externen Wärmetauscher eine spezielle Pumpe (Hydrostal-Pumpe) beschrieben, durch welche die Reaktionsmischung in einem Winkel von 90° geführt wird, wobei das Innere eine konisch geformte Nabe mit einem Flügelblatt aufweist, die sich spiralförmig rotierend bewegt. Ausführungen zum Wärmetauscher werden nicht gemacht. Rührenergie und Zirkulationsenergie müssen in einem bestimmten Verhältnis eingestellt werden. Eine vergleichbare Pumpe wird auch in der EP-B 0 526 741 eingesetzt, wobei auch dort die Suspensionspolymerisation von VC angesprochen wird; der Typ des Wärmetauschers wird dabei als unkritisch angesehen (siehe S. 4, Zeilen 36 bis 40).

In dem Verfahren zur Herstellung von Emulsionspolymerisaten nach der DE-A 44 42 577 wird die bei der exothermen Reaktion freiwerdende Energie teilweise durch Abdestillieren eines Wasser-/Monomer-Gemischs unter reduziertem Druck aus dem Reaktionsgefäß (einem Rührreaktor) abgeführt. Diese Verfahrensmaßnahme führt zwar zu einer gewissen Reduktion der Polymerisationsdauer, d.h. im wesentlichen der Zugabezeit des oder der Monomeren, ist aber für großtechnische Anlagen noch nicht in ausreichendem Maße geeignet, zumal die Einsatzbreite, z.B. ihre Anwendung für niedrigsiedende bzw. unter Normalbedingungen gasförmige (Co-)Monomere (z.B. vom Butadien-Typ), weniger bis nicht gewährleistet ist.

Aufgabe der vorliegenden Erfindung ist es, einen großtechnisch durchführbaren Herstellprozeß mit einem breiten Einsatzgebiet aufzuzeigen, der die Nachteile des Standes der Technik nicht aufweist, d.h. insbesondere kurze Reaktionszeiten ermöglicht, ein breites Spektrum an unterschiedlichen, auch unter Normalbedingungen gasförmigen Monomeren akzeptiert und in den anwendungstechnischen Eigenschaften mit aktuellen Produkten mindestens vergleichbar ist.

Die Lösung der Aufgabe ist ein Verfahren zur Herstellung von Homo- oder Copolymeren mindestens eines der polymerisierbaren Monomeren aus der Gruppe Styrol, Butadien, Vinylchlorid, Vinylacetat, Vinylidenchlorid, Alkyl(meth)acrylat, (Meth)acrylsäure, (Meth)acrylnitril und (Meth)acrylamid in Emulsionspolymerisationstechnik bei einer Polymerisationstemperatur von mindestens 40°C in Anwesenheit eines Dispergierhilfsmittels und eines radikalischen Polymerisationsinitiators. Das erfindungsgemäße Verfahren ist dadurch gekennzeichnet, daß das zu mindestens 85 Gew.-% aus einem oder mehreren dieser Monomeren entstehende Polymere in folgenden Stufen hergestellt wird, wobei
a) in einer ersten Stufe Wasser, als bei der Reaktion inertes Lösungsmittel, gegebenenfalls Dispergierhilfsmittel, gegebenenfalls Saat und gegebenenfalls eine erste Teilmenge an Monomer(en) vorgegeben werden,
b) in einer zweiten Stufe Initiator, und
c) in einer dritten Stufe die Restmenge oder die vollständige Menge an Monomer(en) direkt oder in Emulsionsform in Anwesenheit von weiterem Wasser und gegebenenfalls weiterem Dispergierhilfsmittel oder anderen Hilfsstoffen zugesetzt werden,
wobei die Stufen a) und b) oder b) und c) jeweils auch einstufig gefahren werden können, und in einzelnen oder allen Stufen das als Dispersion vorliegende Reaktionsgemisch durch einen vom und wieder zum Reaktionsgefäß führenden externen Kreislauf bewegt wird, der mindestens eine scherungsarme Pumpe und mindestens einen Wärmetauscher mit einem im wesentlichen laminaren Strömungsprofil aufweist, und die Polymerisationstemperatur zwischen 40 und 120°C liegt.

In bevorzugten Ausführungformen des erfindungsgemäßen Verfahrens entsteht das Polymere zu mindestens 90 Gew.-%, insbesondere zu mindestens 93 Gew.-%, aus einem oder mehreren der genannten Monomeren, und die Polymerisationstemperatur liegt bei 50 bis 100°C, insbesondere bei 60 bis 95°C, ganz besonders bei 70 bis 95°C. Unter den genannten Monomeren sind Styrol, Butadien, Alkyl(meth)acrylat und (Meth)acrylnitril bevorzugt.

Das erfindungsgemäße Verfahren kann entweder so durchgeführt werden, daß in der Stufe a) oder in einer Kombination aus a) und b) bereits eine Teilmenge an Monomer(en) vorgegeben und später in Stufe c) oder in einer Kombination aus b) und c) die Restmenge zugesetzt wird, oder die Gesamtmenge wird ausschließlich in Stufe c) oder in einer Kombination aus b) und c) zugeführt. Sofern in Stufe a) oder in einer Kombination aus a) und b) bereits eine Vorgabe an Monomer(en) erfolgt, so beträgt sie zweckmäßig zwischen 3 und 30 Gew.-% der zuzuführenden Gesamtmenge an Monomer(en), bevorzugt 5 bis 25 Gew.-%, besonders bevorzugt 8 bis 20 Gew.-%. Wasserunlösliche oder schwer wasserlösliche Monomere werden zweckmäßig bereits in Emulsionsform, d.h. mit Wasser und Dispergierhilfsmittel zugeführt.

Neben den vorstehend genannten Monomeren kommen als Comonomere u.a. noch in Betracht: Vinyltoluol, N-Methylol(meth)acrylamid oder Hydroxy-(C₂-C₃)alkyl(meth)acrylat. Sofern keine spezifische Angabe vorliegt, ist unter Alkyl bei den Monomerbezeichnungen ein linearer Rest mit C₁-C₉ oder verzweigter Rest mit C₃-C₉ zu verstehen, insbesondere Methyl, Ethyl, Isopropyl, n-Butyl, tert.-Butyl, Isobutyl oder 2-Ethyl-hexyl.

Die Dispergierhilfsmittel können vor Zugabe des oder der Monomeren vorgelegt oder, zusätzlich zu den Monomeren oder in der Monomeremulsion zugeführt werden. Die Zugabemenge beträgt, bezogen auf die Gesamtmenge an Monomer(en) als 100 Gew.-%, zwischen 0,01 und 10 Gew.-%, bevorzugt zwischen 0,05 und 8 Gew.-% (auch abhängig vom Typ, ob nichtionisch oder anionisch). Bekannte Verbindungen sind - neben natürlichen Seifen - Alkylpolyglykolether wie ethoxylierter Laurylalkohol, Alkylphenolpolyglykolether wie solche des Nonylphenols oder Salze von langkettigen Alkyl-, Aryl- oder Alkylarylsäuren wie Na-laurylsulfat. Neben diesen können auch noch Schutzkolloide (in Mengen zwischen 0,001 bis 15 Gew.-%) wie Celluloseether oder Polyvinylalkohol vorhanden sein. In einer bevorzugten Ausführungsform ist Dispergierhilfsmittel in Stufe a) entweder gleichzeitig mit Saat oder der ersten Teilmenge an Monomer(en) vorhanden, es können in Stufe a) aber auch bereits alle diese 3 Komponenten vorhanden sein. Spätestens in Stufe c) muß Dispergierhilfsmittel vorhanden sein.

Die Saat wird entweder in-situ erzeugt oder bereits vorgegeben; gegebenenfalls kann die Zugabe zu verschiedenen Zeitpunkten erfolgen, z.B. um eine polydisperse oder polymodale (z.B. bimodale) Verteilung zu bewirken. Die Mengenanteile sind - bezogen auf den Anteil an Monomer(en) als 100 Gew.-% - häufig 0,1 bis 5,0 Gew.-%, bevorzugt 0,2 bis 3,0 Gew.-%. In einer bevorzugten Ausführungsform ist in Stufe a) Saat entweder gleichzeitig mit der ersten Teilmenge an Monomer(en) oder ohne diese erste Teilmenge vorhanden.

Als Polymerisationsinitiator zu Beginn, der vollständigen Durchführung bzw. der Weiterführung der Reaktion kommen nicht-wasserlösliche oder bevorzugt wasserlösliche Verbindungen in Betracht. Zu den bekannten Radikalbildnern zählen beispielsweise Wasserstoffperoxid, Peroxodischwefelsäure und deren Salze, z.B. K- oder NH₄-peroxodisulfat, Dibenzoylperoxid, Laurylperoxid, Tri-tert.-butylperoxid, Azobisisobutyronitril, gegebenenfalls zusammen mit reduzierenden Komponeneten wie Na-bisulfit, Ascorbinsäure oder Fe(II)-Salzen, z.B. Tert.-butylhydroperoxid mit Na-bisulfit/Formaldehyd-Addukt oder Na-bisulfit-Aceton-Addukt. Der Polymerisationsinitiator kann in einer oder mehreren Stufen und dabei in variierender Menge und auch Art zugegeben werden; z.B. kann bei komplexeren Systemen wie Redoxinitiatoren auch ein Teil vorgelegt und der Rest kontinuierlich danach zugegeben werden. Häufig wird der Polymerisationsinitiator parallel zum Monomeren zudosiert, er kann dessen Zugabezeit unter-, aber auch überschreiten.

Während der Reaktion ist auch der Zusatz von bis zu 5 Gew.-% - bezogen auf den Anteil an Monomer(en) als 100 Gew.-% - an Hilfsstoffen wie Molekulargewichtsreglern, weiteren Tensiden, Säuren, Salzen oder Komplexbildnern möglich. Wird die Polymerisation in Gegenwart von 3 bis 10 Gew.-% eines flüchtigen organischen Treibmittels durchgeführt, dann lassen sich nach dem erfindungsgemäßen Verfahren auch expandierbare (bzw. expandierte) Polymere, z.B. expandierbares Polystyrol, herstellen.

Zur Konfektionierung, z.B. zur Erhöhung der Lagerstabilität, können dem Endprodukt der Emulsionspolymerisation Laugen wie wäßrige NaOH-Lösung oder Basen (wie NH₃ oder geeignete Amine) zur Einstellung eines pH-Werts zwischen 4 und 10 zugesetzt werden. Weitere bekannte Zusätze sind Konservierungsmittel wie Mikrobizide, Filmbildungs- oder Verlaufmittel, Entschäumer oder die Haftung erhöhende Harzemulsionen ("tackifier").

Die im externen Kreislauf eingesetzten Einrichtungen sind speziell für eine großtechnische Verfahrensführung geeignet.

Die scherungsarme Pumpe muß (bzw. die scherungsarmen Pumpen müssen) niedrige Scherwirkung auf die Emulsion haben, Drücke von z.B. bis zu 15 bar aushalten, unempfindlich gegen Gase in der Emulsion sein, einen guten Stundendurchsatz von bis zu 100m³/h, bevorzugt bis zu 60m³/h, besonders bevorzugt bis zu 45m³/h ermöglichen, auch gegen Temperaturen von über 100°C resistent und leicht zu reinigen sein. Übliche Kreiskolben- oder Zahnradpumpen sind im erfindungsgemäßen Verfahren ungeeignet. Erfindungsgemaß werden Freistrompumpen (Vortex-Pumpe), die nach dem Wirbelprinzip arbeiten eingesetzt, ferner auch Verdrängungspumpen, Monopumpen oder Scheibenpumpen (Disc-flow), Pumpen eines Typs, der ein Minimum an Scherkräften bewirkt, um den relativ instabilen Zustand des Reaktionsgemisches, aber auch der fertigen Produkt-Emulsion nicht oder nur im geringem Maß zu stören. Die Abdichtung der Pumpen kann bevorzugt mit doppelten Gleitringdichtungen in "back-to-back"-Anordnung erfolgen.

Der oder die Wärmetauscher weisen ein im wesentlichen laminares Strömungsprofil auf, d.h. die Einwirkung von Scherkräften soll möglichst gering sein, und es sollen möglichst keine Totzonen (d.h. nicht-durchströmte Zonen) auftreten. Bekannte Wärmetauscher vom Plattentyp kommen eher nicht in Betracht, da zu große mechanische Widerstände durch enge Spalte und Umlenkungen auftreten; außerdem sind sie weniger geeignet für die Auslegung in hoher Druckfestigkeit und schwieriger zu reinigen.

Das erfindungsgemäße Verfahren eignet sich insbesondere zur Herstellung wäßriger Polymerisatdispersionen, deren Verfilmung eine niedrige Glasübergangstemperatur (DSC-Verfahren) aufweist; es eignet sich besonders bei Glasübergangstemperaturen von < 150°C, bevorzugt von < 100°C, insbesondere von < 50°C. Desweiteren zeigt sich seine Eignung auch für Polymerisatdispersionen mit einer mittleren Teilchengröße von bevorzugt 50 bis 2000 nm, insbesondere 100 bis 1500 nm. Die Polymerisatdispersion hat insbesondere eine Viskosität von 30 bis 1500 mPas; während der Polymerisation kann die Viskosität auch höher oder niedriger liegen.

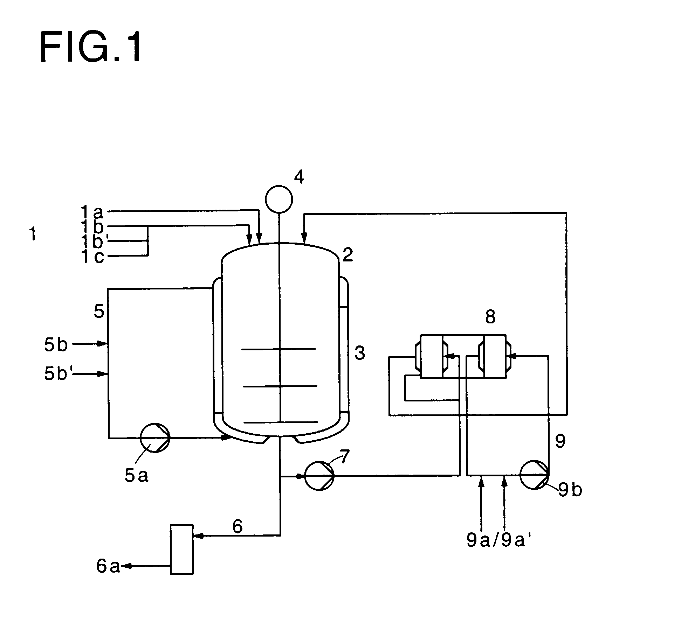

Die Zeichnung zeigt in
- Fig. 1: eine schematische Darstellung der für das Verfahren notwendigen Vorrichtungsteile, und

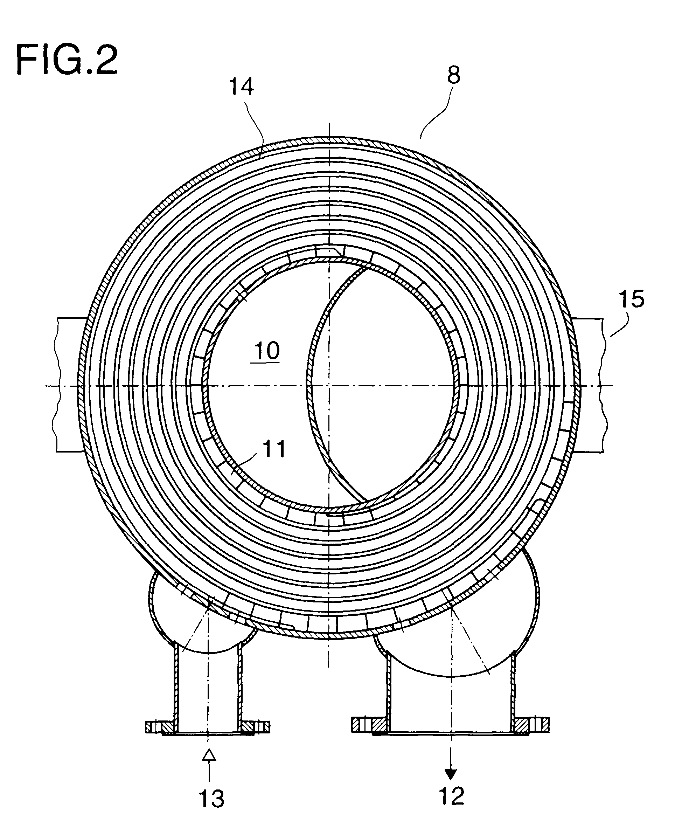

- Fig. 2: einen Querschnitt durch die bevorzugte Ausführungsform des Wärmetauschers in Draufsicht.

Aus Vorratsbehältern bzw. Rohrleitungen 1 werden das oder die Monomere(n) 1b/1b', der Inhibitor 1c, gegebenenfalls unter Zuführung von Wasserdampf über 1a, in den mit einem durch einen Motor angetriebenen Rührer 4 ausgestatteten Polymerisationskessel 2 (z.B. ausgelegt bis 15 bar) gegeben. Der Kessel weist einen Heiz-/Kühlmantel 3 auf, dessen Kreislauf 5 mit Kühlwasser 5b oder mit Wasserdampf 5b' gespeist und über eine Pumpe 5a betrieben wird. Das fertige Produkt aus dem Polymerisationskessel kann über die Rohrleitung 6 mit Wasserdampf/Stickstoff in einen Vorratsbehälter 6a abgelagert werden. Die scherungsarme(n) Pumpe(n) 7, bevorzugt eine Freistrompumpe (Vortex-Pumpe) transportiert das Reaktionsgemisch über eine Rohrleitung zu dem oder den Wärmetauschern 8, die über den Kreislauf 9 über eine Pumpe 9b mit Kühlwasser 9a oder Wasserdampf 9a' gesteuert werden. Der oder die Wärmetauscher weisen ein im wesentlichen laminares Strömungsprofil auf, die Austauscherfläche liegt in der Größenordnung von 20m² bei einem Volumen von etwa 0,3m³. Bevorzugt ist es ein Spiralwärmetauscher. Der externe Kreislauf führt über Rohrleitungen wieder in den Reaktionskessel 2 zurück.

Im Spiralwärmetauscher 8 fließt das Reaktionsgemisch von unten 10 in den spiralförmig angeordneten Teil/Kanal 11 des Wärmetauschers ein und am Ablauf 12 wieder hinaus. Das den Wärmetausch bewirkende Medium (z.B. ein Kühlmittel oder auch ein wärmendes Mittel) - zweckmäßig Kühlwasser oder Sole, das gegebenenfalls mit Wasserdampf erwärmt werden kann - fließt über den Zulauf 13 in den ebenfalls spiralförmig angeordneten Teil 14 des Wärmetauschers ein und am oberen Ende (nicht dargestellt) wieder hinaus. Bevorzugt fließt das Reaktionsgemisch im Gegenstrom zum den Wärmetausch bewirkenden Medium. Der Wandabstand im Kanal für das Reaktionsgemisch ist zweckmäßig größer als der im Kanal für das den Wärmetausch bewirkende Medium, er kann aber auch gleichgroß oder kleiner sein. Die Temperaturdifferenz vom Eingang zum Ausgang beträgt zweckmäßig 3 bis 60 K, bevorzugt 5 bis 30 K, insbesondere 10 bis 20 K. An der Aufhängung 15 kann der Wärmetauscher gegebenenfalls beweglich (z.B. zum Verdrehen um 90°) gelagert werden.

Der oder die Wärmetauscher werden in einer besonders zweckmäßigen Ausführungsform der Erfindung horizontal in Relation zum Polymerisationskessel angeordnet, so daß das Reaktionsgemisch im Wärmetauscher "steht", d.h. er kann nach Beendigung der üblicherweise diskontinuierlich durchgeführten Polymerisation vollständig entleert werden, was aus Gründen der Produkthomogenität und -reinheit erwünscht ist. Am unteren Ende weist der Wärmetauscher gegebenenfalls zusätzliche Entleerungsventile auf (nicht gezeichnet).

Der Durchsatz an Reaktionsgemisch durch den externen Kreislauf liegt im allgemeinen bei 5 bis 100m³/h (gemessen an der Pumpe 7), bevorzugt bei 10 bis 60m³/h, besonders bevorzugt bei 15 bis 45m³/h. Der Gesamtinhalt des externen Kreislaufs liegt (ohne die Kühlkreisläufe) bei etwa 0,9 bis 0,95m³.

Die Kontrolle und Steuerung der jeweiligen Heiz-/Kühlkreisläufe des Polymerisationskessels bzw. des oder der Wärmetauscher erfolgt zweckmäßig über eine Kaskadenkontrolle, d.h. eine erste Temperaturmessung erfolgt normalerweise innen im Polymerisationskessel, eine zweite im Heiz-/Kühlkreislauf dieses Kessels in Kombination mit der des Reaktionsgemischs in der Rohrleitung nach Verlassen des Wärmetauschers und eine dritte in der Rohrleitung nach Verlassen des Wärmetauschers in Kombination mit der des Heiz-/Kühlkreislaufs des Wärmetauschers.

Die erfindungsgemäß hergestellten Homo- und Copolymeren lassen sich - verglichen mit dem Stand der Technik - in guter Ausbeute in kurzen Reaktionszeiten erzeugen und zeigen keine Verschlechterung in den anwendungstechnischen Eigenschaften. Beispielsweise lassen sich uni- oder bimodale Verteilungen erzeugen, d.h. Teilchengrößenverteilungen mit einem oder zwei engen Häufigkeitsverteilungsmaxima. Die nachfolgenden Beispiele erläutern die Erfindung näher.

### Beispiele

In den nachfolgenden Beispielen 1 bis 16 und den Vergleichsbeispielen V1 bis V16 wurde wie folgt verfahren.

Der Heiz-/Kühlkreislauf des Polymerisationskessels wird aufgeheizt. Heißes Wasser wird in den Kessel eingefüllt und mit Hilfe der scherungsarmen Pumpe im externen Kreislauf dieser Kreislauf einschließlich des Wärmetauschers gefüllt. Saat der gewünschten Endproduktzusammensetzung und Napersulfat als radikalischer Polymerisationsinitiator werden in den Kessel (z.B. mit einer Größe von 20 bis 25m³) eingefüllt und das Reaktionsmedium (bisher noch ohne Monomere) während etwa 5 min homogenisiert. Danach beginnt die Zugabe des oder im allgemeinen der Monomeren (entweder direkt oder in wäßriger Emulsion) in ansteigender Menge; nach etwa 10 bis 15 min. wird die Zulaufmenge deutlich erhöht. Die Zugabe der Monomeren kann so durchgeführt werden, daß die Anteile der Monomeren im Zulauf, aber auch die Zulaufmengen pro Zeiteinheit variiert werden; beispielsweise kann in einem ersten Zulaufteil das Verhältnis des ersten zum zweiten Monomeren 70:30, im zweiten dann 50:50 betragen, und im ersten Zeitintervall beträgt der Monomerenanteil 40% und im zweiten 60%. Die Zulaufmenge an Monomeren kann z.B. auch so variiert werden, daß in einem ersten Zeitintervall 75 Teile, in einem zweiten gleichlangen Zeitintervall 100 Teile und in einem dritten vierfachen Zeitintervall 150 Teile jeweils in konstantem Zulauf zugegeben werden. Innerhalb eines Zeitintervalls kann die Zulaufmenge auch kontinuierlich gesteigert oder abgesenkt werden. Die Beendigung der Zugabe der Reaktionskomponenten und Hilfsmittel schließt noch nicht die Reaktionsführung ab, sondern es wird dem Reaktionsgemisch Gelegenheit gegeben, daß die Polymerisation zu Ende geführt wird. Während der vorstehenden Stufen und auch noch in der nachstehend erwähnten Abkühlphase wird das Reaktionsgemisch ständig mit etwa 20 bis 30m³/h durch den externen Kreislauf mit Hilfe der scherungsarmen Pumpe transportiert. In der Abkühlphase wird das Reaktionsprodukt auf 65 bis 70°C abgekühlt, die scherungsarme Pumpe des externen Kreislaufs abgestellt und das Produkt über eine Rohrleitung mit Wasserdampf und Stickstoff in Vorratsbehältern zwischengelagert. Die in den Beispielen (immer mit externem Kreislauf) und Vergleichsbeispielen (immer ohne externen Kreislauf) eingesetzten Monomeren, deren Gewichtsanteile in Gewichtsprozent (fehlende Angaben zu 100 beziehen sich auf weitere Comonomere, überwiegend wasserlösliche Monomere wie gegebenenfalls funktionalisierte(s) (Meth)acrylamid, (Meth)acrylsäure oder vernetzende Monomere wie Butandioldiacrylat oder N-Methylol-acrylamid, die nur in untergeordneter Menge im Copolymeren vorhanden sind), die Polymerisationstemperaturen und die Zugabezeiten des Monomeren sind der nachstehenden Tabelle zu entnehmen.

Der eingesetzte Mengenanteil Saat liegt bei etwa 0,2 bis 1,2 Gew.-Teilen Monomer bzw. Wasser. Das Gewichtsverhältnis Monomer zu Wasser liegt in der Größemordnung von 1:1, das Dispergier(Emulgier)hilfsmittel wird in einem Anteil von etwa 1 Gew.-Teil zugegeben.

Die anwendungstechnischen Eigenschaften sind beim erfindungsgemäßen Verfahren vergleichbar zu denen aus dem Stand der Technik, beispielsweise können die Reaktionsprodukte aus den Beispielen 1 bis 16 als Papierstreichmasse, Farb-/Anstrichmittelkomponente, Klebstoff, Zementmodifizierer oder Lederhilfsmittel Verwendung finden.

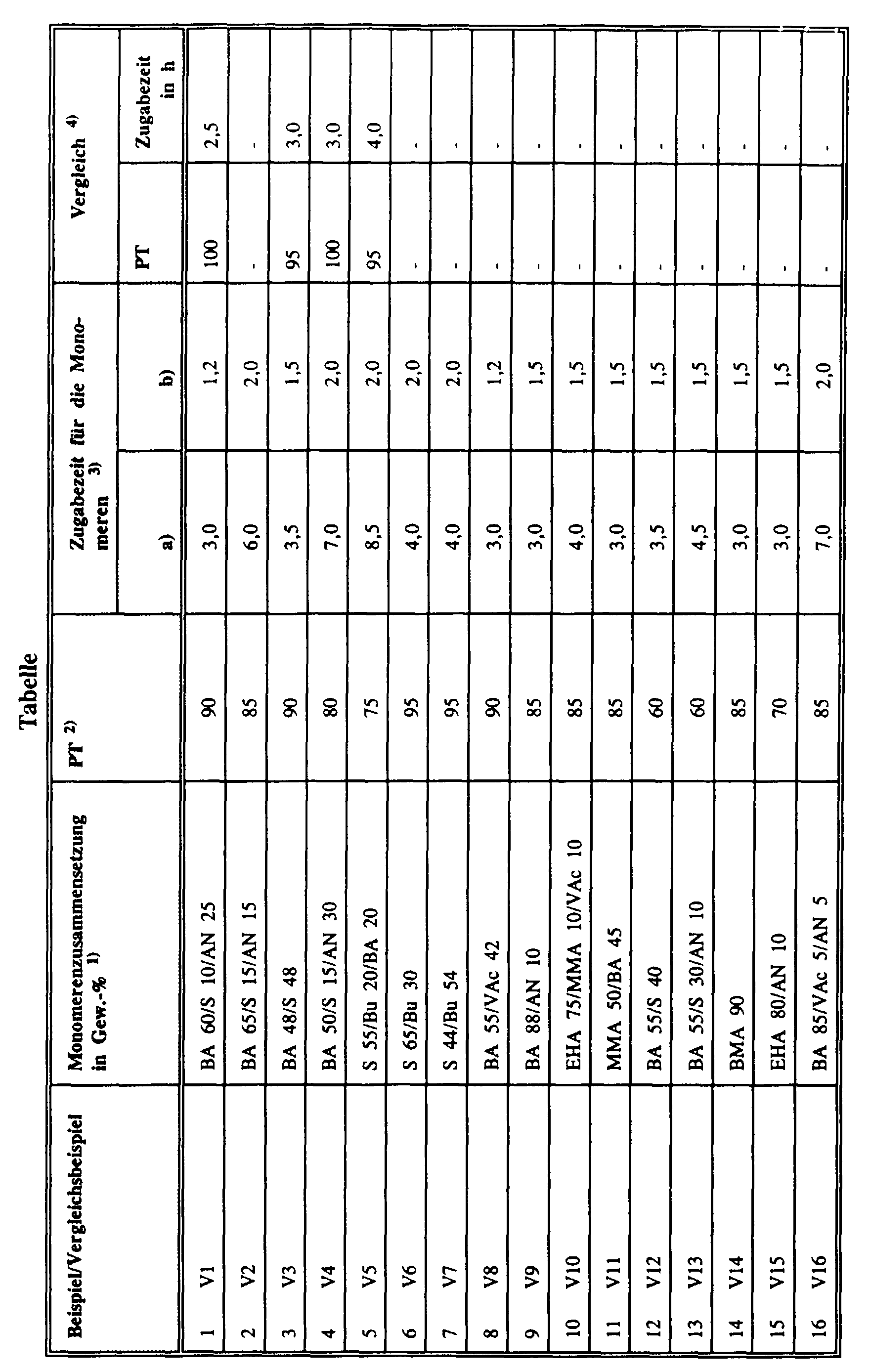

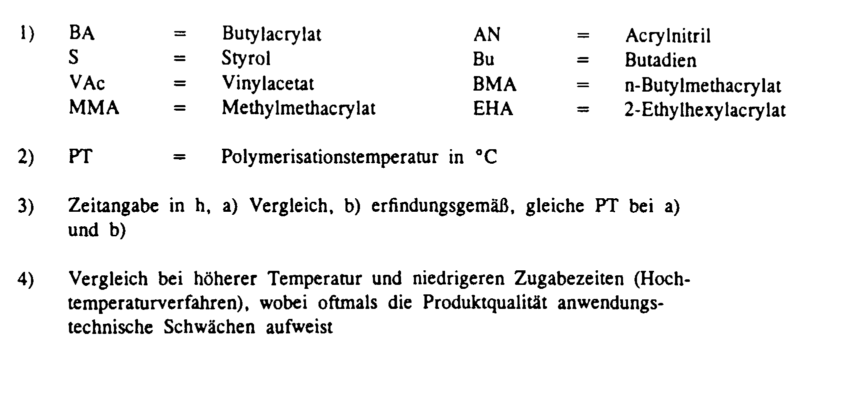

## Patentansprüche

1. Verfahren zur Herstellung von Homo- oder Copolymeren mindestens eines der polymerisierbaren Monomeren aus der Gruppe Styrol, Butadien, Vinylchlorid, Vinylacetat, Vinylidenchlorid, Alkyl(meth)acrylat, Meth(acryl)säure, (Meth)acrylnitril und (Meth)acrylamid in Emulsionspolymerisationstechnik bei einer Polymerisationstemperatur von mindestens 40°C in Anwesenheit eines Dispergierhilfsmittels und eines radikalischen Polymerisationsinitiators, dadurch gekennzeichnet, daß das zu mindestens 85 Gew.-% aus einem oder mehreren dieser Monomeren entstehende Polymere in folgenden Stufen hergestellt wird, wobei
a) in einer ersten Stufe Wasser, als bei der Reaktion inertes Lösungsmittel, gegebenenfalls Dispergierhilfsmittel, gegebenenfalls Saat und gegebenenfalls eine erste Teilmenge an Monomer(en) vorgegeben werden,
b) in einer zweiten Stufe der Initiator, und
c) in einer dritten Stufe die Restmenge oder die vollständige Menge an Monomer(en) direkt oder in Emulsionsform in Anwesenheit von weiterem Wasser und gegebenenfalls weiterem Dispergierhilfsmittel oder anderen Hilfsstoffen zugesetzt werden,
wobei die Stufen a) und b) oder b) und c) jeweils auch einstufig gefahren werden können, und in einzelnen oder allen Stufen das als Dispersion vorliegende Reaktionsgemisch durch einen vom und wieder zum Reaktionsgefäß führenden externen Kreislauf bewegt wird, der mindestens eine scherungsarme Pumpe, ausgewählt aus Freistrompumpen (Vortex-Pumpe), Verdrängungspumpen, Monopumpen und Scheibenpumpen (Disc-flow), und mindestens einen Wärmetauscher mit einem im wesentlichen laminaren Strömungsprofil aufweist, und die Polymerisationstemperatur zwischen 40 und 120°C liegt.

2. Verfahren nach Anspruch 1, dadurch gekennzeichnet, daß das Polymere zu mindestens 90 Gew.-% aus einem oder mehreren der Monomeren entsteht.

3. Verfahren nach Anspruch 1 oder 2, dadurch gekennzeichnet, daß das Polymere zu mindestens 93 Gew.-% aus einem oder mehreren der Monomeren entsteht.

4. Verfahren nach einem der Ansprüche 1 bis 3, dadurch gekennzeichnet, daß die Polymerisationstemperatur bei 50 bis 100°C liegt.

5. Verfahren nach einem der Anprüche 1 bis 4, dadurch gekennzeichnet, daß das Monomer mindestens eines aus der Gruppe Styrol, Butadien, Alkyl(meth)acrylat und (Meth)acrylnitril ist.

6. Verfahren nach einem der Ansprüche 1 bis 5, dadurch gekennzeichnet, daß der Durchsatz an Reaktionsgemisch durch den externen Kreislauf 5 bis 100m³/h insbesondere 10 bis 60m³/h beträgt.

7. Vorrichtung zur Durchführung des Verfahrens nach einem der Ansprüche 1 bis 6, dadurch gekennzeichnet, daß sie
- Einrichtungen (1) zur Lagerung und Zugabe der Reaktionskomponenten und Hilfsstoffe,
- ein Reaktionsgefäß (2) mit einem Heiz-/Kühlmantel (3),
- Einrichtungen (6) zur Entleerung des Reaktionsgefäßes,
- einen externen Kreislauf mit mindestens einer scherungsarmen Pumpe (7), ausgewählt aus Freistrompumpen (Vortex-Pumpe), Verdrängungspumpen, Monopumpen und Scheibenpumpen (Disc-flow), mindestens einem Wärmetauscher (8) mit einem im wesentlichen laminaren Strömungsprofil, und
- Verbindungsleitungen zwischen, von und zu den Einrichtungen der Vorrichtung
aufweist.

8. Vorrichtung nach Anspruch 7, dadurch gekennzeichnet, daß sie als scherungsarme Pumpe(n) (7) eine oder mehrere Freistrompumpe(n) aufweist.

9. Vorrichtung nach Anspruch 7 oder 8, dadurch gekennzeichnet, daß sie als Wärmetauscher (8) einen oder mehrere Spiralwärmetauscher aufweist.

10. Vorrichtung nach einem der Ansprüche 7 bis 9, dadurch gekennzeichnet, daß der oder die Wärmetauscher (8) horizontal in Relation zum Polymerisationskessel angeordnet sind.

## Claims

1. A process for preparing homo- or copolymers of at least one of the polymerizable monomers of the group consisting of styrene, butadiene, vinyl chloride, vinyl acetate, vinylidene chloride, alkyl (meth)acrylate (meth)acrylic acid, (meth)acrylonitrile and (meth)acrylamide in an emulsion polymerization technique at at least 40°C in the presence of a dispersing auxiliary and of a free-radical polymerization initiator, which comprises preparing the polymer, at least 85 % by weight of which is formed from one or more of these monomers, in the following stages, where
a) in a first stage water is added as a solvent which is inert in the reaction, and dispersing auxiliaries, seed and a first portion of monomer(s) are added if desired,
b) in a second stage initiator is added, and
c) in a third stage the remainder or all of the monomer(s) is added directly or in emulsion form and in the presence of further water and, if desired, further dispersing auxiliary or other auxiliaries,
it also being possible to operate the stages a) and b) or b) and c) in each case as single stages, and in certain stages or every stage moving the reaction mixture in its dispersion form by means of an external circuit which leads from and back to the reaction vessel and comprises at least one low-shear pump, selected from nonclogging pumps (vortex pumps), displacement pumps, monopumps and disk pumps (disk-flow), and at least one heat exchanger having an essentially laminar flow profile, and carrying out polymerization at from 40 to 12°C.

2. A process as claimed in claim 1, wherein at least 90 % by weight of the polymer is formed from one or more of the monomers.

3. A process as claimed in claim 1 or 2, wherein at least 93 % by weight of the polymer is formed from one or more of the monomers.

4. A process as claimed in any of claims 1 to 3, wherein the polymerization is carried out at from 50 to 100°C.

5. A process as claimed in any of claims 1 to 4, wherein the monomer is at least one from the group consisting of styrene, butadiene, alkyl (meth)acrylate and (meth)acrylonitrile.

6. A process as claimed in any of claims 1 to 5, wherein the throughput of reaction mixture through the external circuit is from 5 to 100 m³/h, in particular from 10 to 60 m³/h.

7. A device for implementing the process as claimed in any of claims 1 to 6, which comprises
- equipment (1) for storing and adding the reaction components and auxiliaries,
- a reaction vessel (2) with a heating/cooling jacket (3),
- equipment (6) for emptying the reaction vessel,
- an external circuit having at least one low-shear pump (7), selected from nonclogging pumps (vortex pump), displacement pumps, monopumps and disk pumps (disk-flow), and at least one heat exchanger (8) having an essentially laminar flow profile, and
- connecting lines between, from and to the equipment of the device.

8. A device as claimed in claim 7, which as low-shear pump(s) (7) has one or more nonclogging pumps.

9. A device as claimed in claim 7 or 8, which as heat exchanger(s) (8) has one or more spiral heat exchangers.

10. A device as claimed in any of claims 7 to 9, wherein the heat exchanger or exchangers (8) is or are arranged horizontally in relation to the polymerization reactor.

## Revendications

1. Procédé de préparation d'homo- ou copolymères d'au moins un des monomères du groupe formé par le styrène, le butadiène, le chlorure de vinyle, l'acétate de vinyle, le chlorure de vinylidène, les (méth)acrylates d'alkyle, l'acide (méth)acrylique, le (méth)acrylonitrile et le (méth)acrylamide par polymérisation en émulsion, à une température de polymérisation d'au moins 40°C, en présence d'un adjuvant de dispersion et d'un initiateur de polymérisation radicalaire, caractérisé en ce que le polymère formé à partir d'au moins 85% en poids d'un ou plusieurs de ces monomères est préparé par les étapes suivantes, où
a) dans une première étape, on part d'eau, en tant que solvant inerte dans la réaction, éventuellement un agent de dispersion, éventuellement un germe et éventuellement une première partie de monomère(s),
b) dans une deuxième étape, on ajoute l'initiateur, et
c) dans une troisième étape, on ajoute le reste du ou des monomère(s), directement ou sous forme d'émulsion, en présence d'un apport d'eau et éventuellement d'agent de dispersion ou d'autres adjuvants,
les étapes a) et b) ou b) et c) pouvant à chaque fois être également entreprises en une étape, et dans certaines ou dans toutes les étapes, le mélange réactionnel se présentant comme une dispersion est brassé par un circuit externe sortant du et retournant au réacteur, et qui comporte au moins une pompe à faible cisaillement, choisie dans le groupe formé par des pompes non engorgeables (type vortex), des pompes à pistons plongeurs et rotatives, des pompes mono et des pompes à disques (disc flow), et au moins un échangeur de chaleur présentant un profil d'écoulement essentiellement laminaire, et la température de polymérisation se situant entre 40 et 120°C.

2. Procédé selon la revendication 1, caractérisé en ce que le polymère est formé à au moins 90% d'un ou plusieurs des monomères.

3. Procédé selon la revendication 1, caractérisé en ce que le polymère est formé à au moins 93% à partir d'un ou plusieurs des monomères.

4. Procédé selon l'une des revendications 1 à 3, caractérisé en ce que la température de polymérisation est de 50 à 100°C.

5. Procédé selon l'une des revendications 1 à 4, caractérisé en ce que le monomère est choisi dans le groupe formé par le styrène, le butadiène, les (méth)acrylates d'alkyle et le (méth)acrylonitrile.

6. Procédé selon l'une des revendications 1 à 5, caractérisé en ce que le débit du mélange réactionnel dans le circuit externe 5 peut atteindre 100 m³/h, et est en particulier de 10 à 60 m³/h.

7. Appareillage pour l'exécution du procédé selon l'une des revendications 1 à 6, caractérisé en ce qu'il comporte
- des dispositifs (1) pour le stockage et l'amenée des composants de la réaction et des adjuvants,
- un réacteur (2) équipé d'un manteau chauffant - réfrigérant (3),
- des dispositifs (6) pour la vidange du réacteur,
- un circuit externe avec au moins une pompe à faible cisaillement (7) choisie dans le groupe formé des pompes non engorgeables (type vortex), des pompes à pistons plongeurs et rotatives, des pompes mono et des pompes à disques (disc flow), et au moins un échangeur de chaleur présentant un profil d'écoulement essentiellement laminaire, et
- des canalisations de liaison entre vers et en provenance des éléments de l'appareillage.

8. Appareillage selon la revendication 7, caractérisé en ce qu'il comporte, comme pompe(s) à faible cisaillement (7), une ou plusieurs pompe(s) non engorgeable(s).

9. Appareillage selon la revendication 7 ou 8, caractérisé en ce qu'il comporte comme échangeur de chaleur (8) un ou plusieurs échangeur(s) de chaleur de type serpentin (spirale).

10. Appareillage selon l'une des revendications 7 à 9, caractérisé en ce que le ou les échangeur(s) de chaleur (8) sont installés en position horizontale vis-à-vis du réacteur de polymérisation.
